# EUROPEAN PATENT APPLICATION

(11) **EP 3 213 939 A1**
(43) Date of publication of application: **06.09.2017**
(21) Application number: 14904982.7
(22) Date of filing: 05.11.2014
(51) Int. Cl.: B60D 5/00

(54) **ARTICULATED VEHICLE CHASSIS ARTICULATION SYSTEM**

(30) Priority: 27.10.2014 CN 201410584284
(71) Applicant: Jointech (Suzhou) Vehicle System Co., Ltd., Suzhou, Jiangsu 215211 (CN)
(72) Inventor: HAO, Qingjun, Suzhou Jiangsu 215211 (CN); MA, Chunbo, Suzhou Jiangsu 215211 (CN); SU, Xianjin, Suzhou Jiangsu 215211 (CN); LI, Dashan, Suzhou Jiangsu 215211 (CN); ZHAO, Jianwei, Suzhou Jiangsu 215211 (CN); CHEN, Liang, Suzhou Jiangsu 215211 (CN); SHEN, Xianglin, Suzhou Jiangsu 215211 (CN)
(74) Representative: London IP Ltd
(86) International application number: PCT/CN2014/090292
(87) International publication number: WO 2016/065656

(57) **Abstract**

The present invention discloses a chassis articulation system of articulated vehicle, comprising a front frame, a rear frame, a turntable bearing, and a left buffer and a right buffer which are installed on two sides of said turntable bearing. The hydraulic control oil circuit on each buffer is set as: when a rod cavity of hydraulic cylinder is compressed, the hydraulic oil in the rod cavity is returned to an oil storage tank via a damping oil circuit with a set damping, and the hydraulic oil in the oil storage tank is sucked to a rodless cavity via an oil circuit without a damping; when the rodless cavity of the hydraulic cylinder is compressed, the oil circuits by which the hydraulic oil is returned from the rodless cavity to the oil storage tank and the oil circuit by which the hydraulic oil is sucked from the oil storage tank to the rod cavity are both oil circuits without a damping. In this case, when a vehicle turns, the piston rod of one buffer's hydraulic cylinder is extended to provide the buffer with a buffering force with a set damping and the piston rod of the other buffer's hydraulic cylinder is compressed to provide a very small buffering force, making the vehicle turn more smoothly, more stably and more safely; when a vehicle slews, the buffer produces a very small damping torque to make the vehicle slew more quickly and easily.

## Description

### Technical field

The present invention relates to the vehicle chassis articulated technology, especially to an chassis articulation system of articulated vehicle with a double-cylinder and single-damping buffer device.

### Background art

With the rapid development of China's automobile manufacturing industry, vehicle manufacturing industries advance rapidly and an articulated bus is gradually popularized in large and medium-sized cities because of its advantages of large passenger capacity and high utilization factor, etc. An articulated bus typically comprises a front carriage, a rear carriage and a chassis articulation system which connects the front and rear carriages. The chassis articulation system includes a front frame, a rear frame, a turntable bearing, a hydraulic damping device, etc, wherein said front frame is fixly connected with the front carriage of articulated bus through a front beam and said rear frame is fixly connected with the rear carriage of articulated bus through a rear beam.

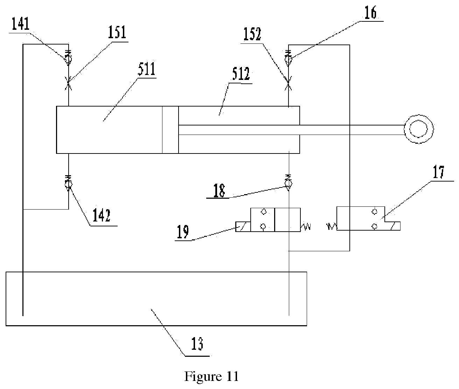

The hydraulic damping device in the chassis articulation system is the key factor of restricting an articulated bus's performance. A hydraulic damping device in an articulated bus usually comprises of a left hydraulic cylinder, a right hydraulic cylinder, a liquid storage tank and an electrical control system. For example, a hydraulic buffering system disclosed by this applicant in a Chinese patent (Application No.: 201010141173.7) titled "A Hydraulic Buffering System" includes a hydraulic cylinder 12 and a liquid storage tank 13. As shown in Figure 11, said hydraulic cylinder has a rod cavity 121 and a rodless cavity 122, wherein the hydraulic circuit between said rodless cavity 122 and said liquid storage tank 13 includes a first oil absorption circuit in which a first one-way valve 141 is located, and a first oil discharge circuit formed by a second one-way valve 142 and a hydraulic damping hole 151, and the hydraulic circuit between said rod cavity 121 and said liquid storage tank 13 includes a second oil discharge circuit formed by a third one-way valve 16, a hydraulic damping hole 152 and a first solenoid valve 17, and a second oil absorption circuit formed by a fourth one-way valve 18 and a second solenoid valve 19. Through the set hydraulic damping hole, the hydraulic system provides a damper directly proportional to the turning speed in the case of vehicle turning, and has the functions of safe lock and straight driving recovery.

However, in the vehicle turning process, the dampers required by the system are different with the increase of turning angle. Meanwhile, when a vehicle recovers from a turning state to a straight driving state, the hydraulic cylinder on the compressed side of the system provides a certain damper under the action of hydraulic damping hole to slow down the vehicle rotating speed. If the hydraulic damping hole is blocked by hydraulic oil, the hydraulic cylinder will fail.

### Contents of the Invention

To overcome technical defects of the prior art, this invention provide an a chassis articulation system of articulated vehicle, which uses a damping device with a double-cylinder and single-damping effect to provide more accurate hydraulic buffer damping control in the vehicle turning process so as to make the articulated system's movement performance more stable as well as to make the vehicle travel more faster and safer in the recovering process from a turning state to a straight driving state.

To achieve the above purpose, the invention adopts the following technical solution: a chassis articulation system of an articulated vehicle, comprises a front frame, a rear frame, a turntable bearing which connects said front frame and said rear frame, and a hydraulic damping device, wherein said hydraulic damping device comprises a hydraulic cylinder, an oil storage tank, and a hydraulic control oil circuit formed between the hydraulic cylinder and the oil storage tank. Said hydraulic cyliner is provided with a piston and a piston rod, and the piston divides the hydraulic cylinder into a rod cavity and a rodless cavity. The hydraulic control oil circuit is set as : when the rod cavity of the hydraulic cylinder is compressed, the hydraulic oil in said rod cavity is returned to the oil storage tank via a oil circuit with a set damping, and the hydraulic oil in the oil storage tank is sucked to the rodless cavity via an oil circuit without a damping; when the rodless cavity of hydraulic cylinder is compressed, the oil circuit by which the hydraulic oil is returned from the rodless cavity to the oil storage tank and the oil circuit by which the hydraulic oil is sucked from the oil storage tank to the rod cavity are both oil circuits without a damping; and in the turning process of the articulated bus, the axial line of said hydraulic damping device will pass through the rotation center of said turntable bearing when the vehicle turning reaches a certain angle.

As a preferred embodiment, said hydraulic damping device includes a left buffer and a right buffer which are installed on both sides of said turntable bearing. When the articulated bus turns, the piston rod of a hydraulic cylinder of one of left and right buffers is stretched to provide the buffer with a buffering force of said set damping; the piston rod of a hydraulic cylinder of the other buffer is compressed to provide the buffer with a very small buffering force.

As a preferred embodiment, when the articulated bus turns left or right reaching a certain angle, the axial line of the buffer on the corresponding side passes through the rotation center of said turntable bearing, and the piston rod of such side buffer is retracted to the shortest position; when the articulated bus continues to turn to exceed the above-mentioned angle, the piston rod of such side buffer will change from a retracted state to an extended state.

As a preferred embodiment, the damping of said oil circuit with a set damping includes a basic damping selected as per the compression degree of said rod cavity, an enhanced damping and a safe lock damping.

As a preferred embodiment, when the articulated bus turns left or right at the same angle, the damping moments produced by said hydraulic damping device are mirror images of each other.

As a preferred embodiment, said hydraulic control oil circuit includes a first oil absorption circuit and a first oil return circuit which are installed between a rodless cavity of hydraulic cylinder and an oil storage tank, and a second oil absorption circuit and a second oil return circuit which are installed between a rod cavity of hydraulic cylinder and an oil storage tank; there is basically no damping produced between the hydraulic cylinder and the oil storage tank when the hydraulic oil passes through said first oil absorption circuit, said first oil return circuit and said second oil absorption circuit, and different dampings are produced according to the pressure of said second oil return circuit when the hydraulic oil passes through said second oil return circuit.

As a preferred embodiment, said first oil absorption circuit is provided with a first one-way valve, said first oil return circuit is provided with a second one-way valve, and said second oil absorption circuit is provided with a fourth one-way valve.

As a preferred embodiment, said second oil return circuit is provided with a third one-way valve, a mechanical valve, a solenoid valve, a hydraulic damping hole and a first overflow valve; said solenoid valve is connected with said hydraulic damping hole and then connect with said first overflow valve in parallel; said solenoid valve and said first overflow which are connected in parallel are then connected with said mechanical valve and said third one-way valve, and said solenoid valve is connected with said hydraulic damping hole to form a basic damping oil circuit, which is used to produce a basic damping; said parallel-connected first overflow valve forms an enhanced damping oil circuit, which is used to produce a larger enhanced damping than said basic damping.

As a preferred embodiment, said second oil return circuit is also parallel-connected with a safe lock oil circuit; said safe lock oil circuit is provided with a second overflow valve connected with said third one-way valve, which is used to provide a safe lock damping that larger than said enhanced damping.

As a preferred embodiment, said oil storage tank is installed outside the hydraulic cylinder, and both two ends of said oil storage tank and said hydraulic cylinder are fixly connected with a manifold block and an end cover respectively; said hydraulic cylinder and said oil storage tank are connected with said rear frame through said end cover, and said piston and said piston rod are connected with said front frame.

As a preferred embodiment, said manifold block is provided with a mechanical valve that has a mechanical valve core extending into the rod cavity of the hydraulic cylinder, and said mechanical valve core closes said mechanical valve under the push of said piston.

As a preferred embodiment, said chassis articulation system of articulated vehicle also includes an electric control unit, which controls the opening or closing of said solenoid valve according to the pressure of hydraulic oil circuit.

The axial line of said hydraulic damping device refers to the central axis line of the hydraulic cylinder for the left or right buffer.

In the articulated system used in this invention, when the articulated bus turns and reaches a certain angle (the angle of 38.6° in the embodiment is preferred), the central axis line of the hydraulic cylinder of the left or right buffer passes through the rotation center of said turntable bearing, and at this point, the piston rod of the buffer compresses said rodless cavity to the rodless cavity side to the extreme position (i.e. the shortest position to which the piston rod extends); when the articulated bus continues to turn beyond the above-mentioned angle, the piston rod of the buffer changes from a retracted state to an extended state.

When the turning angle of the articulated bus exceeds the first angle, the articulated system needs a bigger damping moment, and at this point, by taking advantage of the characteristic where the piston rods of left and right buffers both extending, the hydraulic control principle for buffer is designed to obtain a curve of damping moments which are mirror images of each other; when the vehicle turns and then needs to slew, the buffering system provided only a relatively low damping moment to make the vehicle able to slew quickly and easily; when the vehicle's electric control system fails and the hydraulic buffering system with a double-cylinder and single-damping powers off, a function of enhanced damping and safe lock damping is provided for the articulated system to ensure that the vehicle safely travels to the repair factory, and in the case of abnormal power failure, a high damping force is provided for the vehicle to make the vehicle maintain its original state and stay safe.

Compared with the prior art, the present invention has the advantages of lower cost, more stable movement performance of articulated system, and higher safety performance.

### Brief Description of the Drawings

Figure 1 is a schematic diagram for a chassis articulation system of articulated vehicle of the present invention;
Figure 2 is a hydraulic schematic diagram for buffer in the chassis articulation system of articulated vehicle of the present invention;
Figure 3 is a structural schematic diagram for buffer in the chassis articulation system of articulated vehicle of the present invention;
Figure 4 is an elevation view for a manifold block in a buffer of the present invention;
Figure 5 is a section view where a mechanical valve is installed in the manifold block;
Figure 6 is a hydraulic schematic diagram for a chassis articulation system of articulated vehicle of the present invention;
Figure 7 is a schematic diagram for positional relation between a turntable bearing and a hydraulic damping device in the present invention when a vehicle goes straight;
Figure 8 is a schematic diagram for positional relation between a turntable bearing and a hydraulic damping device in the present invention when a vehicle turns right at an angle of 38.6°;
Figure 9 is a schematic diagram for a second embodiment of buffer of a chassis articulation system of articulated vehicle in the present invention;
Figure 10 is a schematic diagram for a third embodiment of buffer of a chassis articulation system of articulated vehicle in the present invention;
Figure 11 is a hydraulic schematic diagram for a articulated system of articulated bus in the background art.

**Description of symbols in the figures**

| | | | |
|---|---|---|---|
| 1 | Front frame | 2 | Rear frame |
| 3 | Turntable bearing | 4 | Electric control unit |
| 5 | Left buffer | 6 | Right buffer |
| 51 | Hydraulic cylinder | 511 | Rodless cavity |
| 512 | Rod cavity | 52 | Oil storage tank |
| 53 | Manifold block | 54 | End cover |
| 55 | Piston | 56 | Piston rod |
| 57 | Outer tube | 58 | Set screw |
| 59 | Oil inlet | 91 | First one-way valve |
| 92 | Second one-way valve | 93 | Third one-way valve |
| 94 | Fourth one-way valve | 95 | Mechanical valve |
| 951 | Mechanical valve core | 952 | Spring |
| 953 | Spring pocket | 954 | Circulation section |
| 955 | Blocking section | 21, 23, 96 | Solenoid valve |
| 98 | First overflow valve | 22, 24, 97 | Hydraulic damping hole |
| 99 | Second overflow valve | | |

### Detailed Description

According to the figures, below is a clear and complete description of technical scheme for an embodiment of the present invention.

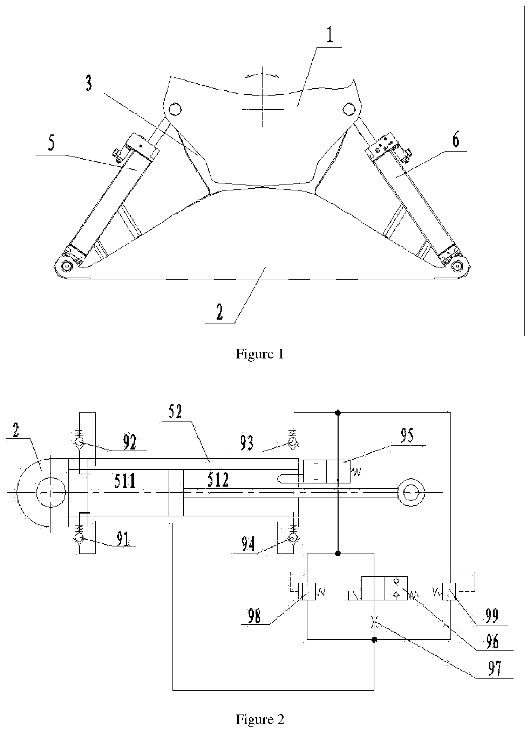

As shown in Figure 1, a chassis articulation system of articulated vehicle disclosed by the present invention is used to connect the front and rear carriages (not shown in the figure) of articulated bus, comprising a front frame 1, a rear frame 2, a turntable bearing 3, a hydraulic damping device and an electric control system 4. Said front frame 1 is connected with said front carriage, said rear frame 2 is connected with said rear carriage, and front and rear carriages enable vehicle turning through the rotation of said turntable bearing 3; said hydraulic damping device includes a left buffer 5 and a right buffer 6 which are installed on both sides of said turntable bearing 3, and both ends of said left buffer 5 and said right buffer 6 are connected with said front frame 1 and said rear frame 2 respectively and used to provide a buffer damping in the case of vehicle turning.

Figure 2 shows a hydraulic schematic diagram for the left buffer 5 and the right buffer 6, which have the same structure. Used said left buffer 5 as an example, it comprises a hydraulic cylinder 51, an oil storage tank 52, a manifold block 53, an end cover 54, and a hydraulic control oil circuit installed between said hydraulic cylinder 51 and said oil storage tank 52. Said oil storage tank 52 is installed outside said hydraulic cylinder 51; said manifold block 53 is fixly installed on one side of said hydraulic cylinder 51 and said oil storage tank 52, and said end cover 54 is installed on the other side of said hydraulic cylinder 51 and said oil storage tank 52. Said hydraulic cylinder 51 is provided with a piston 55, which is connected with a piston rod 56; said piston 55 divides said hydraulic cylinder 51 into a rodless cavity 511 and a rod cavity 512. Specifically, said hydraulic cylinder 51, said oil storage tank 52 and said manifold block 53 are fixly connected and then connected to said rear frame 2 of articulated system; said piston 55 and said piston rod 56 are connected with said front frame 1 of articulated system; therefore, said left buffer 5 and said right buffer 6 produce a buffer damping on the hydraulic control oil circuit through the extending and retracting of said piston rod 56 in the case of vehicle turning so as to provide a buffering force for vehicle turning.

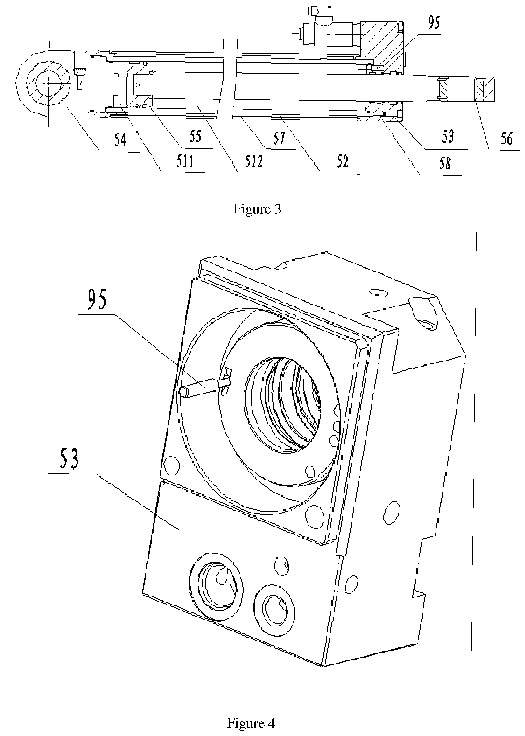

As shown in Figure 3, said manifold block 53 is installed on one side of said hydraulic cylinder 51 and said oil storage tank 52 and sealed at its end through a sealing part (not shown in the figure). The barrel of said hydraulic cylinder 51 is peripherally provided with an outer tube 57, and said oil storage tank 52 is an annular sealing region that formed between said outer tube 57 and said barrel of hydraulic cylinder 51. Said manifold block 53 and said outer tube 57 are welded together through a flange, and said end cover 54 is installed on the other side of said barrel of hydraulic cylinder 51 and said outer tube 57 and sealed at its end through a sealing part. Preferably, said manifold block 53 is also provided with a flat point set screw 58, which is pressly-fixed on the cylinder barrel to avoid axial movement of the cylinder barrel between said manifold block 53 and said end cover 54.

Said hydraulic control oil circuit is installed between said hydraulic cylinder 51 and said oil storage tank 52, comprising a first oil absorption circuit, a first oil return circuit, a second oil absorption circuit and a second oil return circuit; said first oil absorption circuit is installed between said oil storage tank 52 and said rodless cavity 511 of hydraulic cylinder 51 and provided with a first one-way valve 91, which is opened when a piston rod 56 extends outward (i.e. the oil pressure of said rodless cavity decreases) to make the hydraulic oil sucked from said oil storage tank 52 to said rodless cavity 511 of hydraulic cylinder 51; said first oil return circuit is installed between said rodless cavity 511 of hydraulic cylinder 51 and said oil storage tank 52 and provided with a second one-way valve 92, which is opened when said piston rod 56 retracts inward (i.e. the oil pressure of said rodless cavity 511 of hydraulic cylinder 51 increases) to make the hydraulic oil discharged from said rodless cavity 511 of hydraulic cylinder 51 to said oil storage tank 52; said second oil absorption circuit is installed between said oil storage tank 52 and said rod cavity 512 of hydraulic cylinder 51 and provided with a fourth one-way valve 94, which is opened when the oil pressure of said rod cavity 512 of hydraulic cylinder 51 decreases to make the hydraulic oil sucked from said oil storage tank 52 to said rod cavity 512; said second oil return circuit is installed between said rod cavity 512 of hydraulic cylinder 51 and said oil storage tank 52 and provided with a third one-way valve 93 and a damping oil circuit, wherein said third one-way valve 93 is opened when the oil pressure of said rod cavity 512 increases.

Said damping oil circuit includes a damping control oil circuit and a safe lock oil circuit which are connected in parallel; said damping control oil circuit is provided with a mechanical valve 95, a solenoid valve 96, a hydraulic damping hole 97 and a first overflow valve 98, wherein said solenoid valve 96 is connected with said hydraulic damping hole 97 to form a basic damping oil circuit and then connected in parallel with said first overflow valve 98 of the enhanced damping oil circuit, and said mechanical valve 95 is connected with said parallel-connected solenoid valve 96, said hydraulic damping hole 97 and said first overflow valve 98. Said safe lock oil circuit is provided with a second overflow valve 99; after said safe lock circuit is parallel-connected with said damping control oil circuit, one end of it is connected with said third one-way valve 93 and the other end of it is connected with said oil storage tank 52. Wherein, a basic damping oil circuit that is formed by said solenoid valve 96 and said hydraulic damping hole 97 through parallel connection, providing a basic damping buffering force for the buffer; the enhance damping oil circuit where said first overflow valve 98 is located provides an enhanced damping buffering force for the buffer.

Preferably, said first overflow valve 98 and said second overflow valve 99 are preset with hydraulic opening pressures respectively, and the hydraulic opening pressure of said first overflow valve 98 is higher than the hydraulic pressure produced by said hydraulic damping hole 97 in the case of normal running speed, and the hydraulic opening pressure of said second overflow valve 99 is higher than that of said first overflow valve 98 so that the hydraulic damping produced on the enhanced damping oil circuit is greater than that produced on the basic damping oil circuit, while the hydraulic damping produced on the safe lock oil circuit is greater than that produced on the enhanced damping oil circuit.

Further, said first oil absorption circuit and said first oil return circuit are installed on said end cover 54, and said second oil absorption circuit and said second oil return circuit are installed on said manifold block 53.

When said piston rod 56 of hydraulic cylinder 51 extends toward one end of said rod cavity 512, the volume of said rod cavity 512 decreases and press the hydraulic oil flowing into said oil storage tank 52 via the second oil return circuit; when said solenoid valve 96 is in an energized state, the basic damping oil circuit is connected and the hydraulic damping hole 97 sets the buffer damping pressure for the buffer, and at this point, the buffer damping force of the buffer is directly proportional to the flow quantity of hydraulic oil passing through said hydraulic damping hole 97 as well as to the linear extending velocity of said piston rod 56.

When the linear extending speed of said piston rod 56 is fast enough and the pressure of said hydraulic damping hole 97 reaches the preset pressure value of said first overflow valve 98, the first overflow valve begins pressure relief and the pressure of oil circuit is basically kept constant at the preset pressure value set by said first overflow valve 98 until the linear extending speed of said piston rod 56 reduces, the flow quantity of hydraulic oil passing through said hydraulic damping hole 97 decreases and the pressure value produced by the hydraulic damping hole is lower than the set pressure value of said first overflow valve 98; when said solenoid valve 96 is in a de-energized state, the basic damping oil circuit is closed, and at this point, the first overflow valve 98 sets the buffer damping pressure for the buffer and the damping pressure is basically kept constant at the set opening pressure set by said first overflow valve 98; when said piston rod 56 continues to extend, the piston gradually compresses the handle of said mechanical valve 95 installed on said manifold block 53 to make the passageway of the damping control oil circuit gradually downsized and even closed, and at this point the second overflow valve 99 sets the buffer damping pressure for the buffer and the buffer is in a safe lock state.

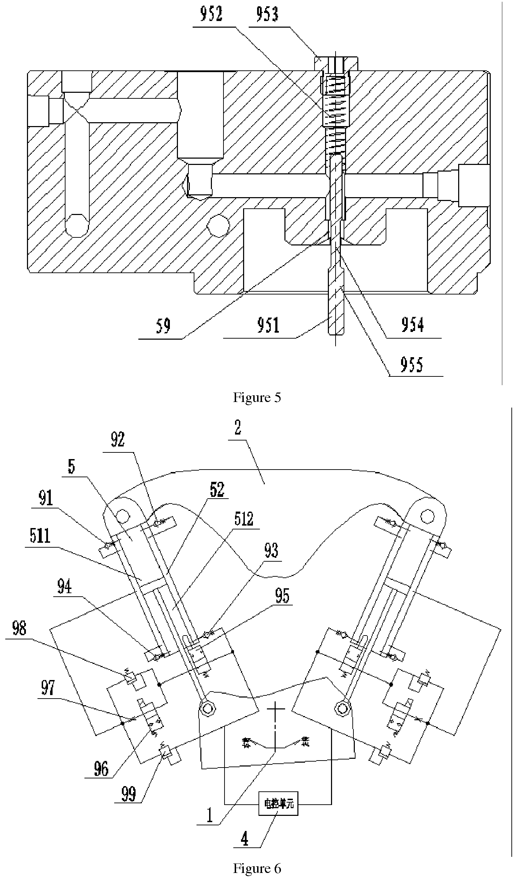

As shown in Figures 4 and 5, said mechanical valve 95 is installed in the mechanical valve mounting hole (not shown in the figure) on the said manifold block 53, and the mounting hole is provided with an oil inlet 59 of the damping control oil circuit; said mechanical valve 95 has a mechanical valve core 951, a spring 952 which are pushed by said mechanical valve core 951 and a spring pocket 953. The mechanical valve core 951 has a circulation section 954 with small diameter and a blocking section 955 with large diameter. The mechanical valve 95 is installed in the mounting hole, and the outer end of said mechanical valve core extends into the rod cavity 512 of said hydraulic cylinder 51 that outside the manifold block 53. Under normal working conditions, the oil inlet 59 on the mounting hole is located at the circulation section 954 of said mechanical valve core 951 and the hydraulic oil circulates via said oil inlet 59; when the mechanical valve core 951 is pushed by the piston 55 extending outward so that the valve core of said mechanical valve 95 compresses the spring 952 and moves toward the mounting hole and the blocking section 955 of the valve core stretches into the location of said oil inlet 59, since the blocking section 955 of said valve core is closely mated with the mounting hole, the oil inlet 59 of the damping control oil circuit is blocked and the mechanical valve 95 is closed, that is, according to the settings of oil circuits on the manifold block 53, the blocking section 955 of the valve core blocks the common inlet oil line of both basic damping oil circuit and enhanced damping oil circuit, and does not block the oil inlets of both safe lock oil circuit and second oil absorption circuit.

When the piston rod 56 of said hydraulic cylinder 51 extends toward one end of said rod cavity 512, the volume of said rodless cavity 511 increases and there is negative pressure produced in the cavity, and the first one-way valve 91 is opened so that the first oil absorption circuit sucks the oil from said oil storage tank 52 and the damping force on such oil circuit is negligible, therefore forms an undamped oil circuit.

When the piston rod 56 of said hydraulic cylinder 51 retracts toward one end of said rodless cavity 511, the volume of said rod cavity 512 increases and there is negative pressure produced in the cavity, and the fourth one-way valve 94 is opened so that the hydraulic oil is sucked from said oil storage tank 51 into said rod cavity 512 of hydraulic cylinder 51 via the second oil absorption circuit; the volume of said rodless cavity 511 decreases, the oil pressure of such cavity increases, the second one-way valve 92 is opened and the hydraulic oil is discharged from the rodless cavity 511 into the oil storage tank 52 via the first oil return circuit, and at this point the damping buffering force on such oil circuit is negligible, therefore the first oil return circuit forms an undamped oil circuit.

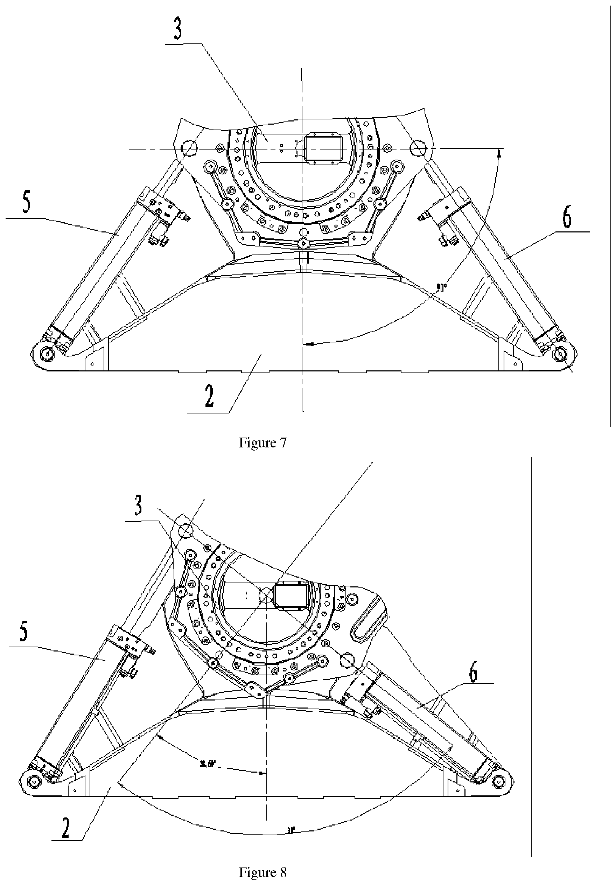

Further, as shown in Figure 6, left and right buffers 5 and 6 which are mirror images of each other are connected with an articulated system and controlled by an electric control unit 4 thereafter forms a double-cylinder and single-damper hydraulic buffering system (since left and right buffers 5 and 6 have the same structure and hydraulic circuit, related components of right buffer 6 are not marked in the figure); said electric control unit 4 is the same as that in the prior art, including a vehicle CAN communication system and a proximity switch (not shown in the figure); after a vehicle starts to move, the solenoid valves 96 of left and right buffers 5 and 6 are energized; Figure 7 shows a positional relationship of articulated system when a vehicle goes straight ahead, where left buffer 5 and right buffer 6 are symmetrically distributed on both sides of the articulated bearing 3. When a vehicle turns right to a first angle (i.e. 38.6° in this embodiment), the positional relationship between hydraulic buffering system and articulated system is shown in Figure 8, where the axial line of right buffer 6 passes through the rotation center of turntable bearing 3 and the piston rod 56 of right buffer 6 retracts to the shortest position; if the vehicle continues to turn right, the piston rod changes from a retracted state to an extended state and left buffer 5 continues to extend, that is, when the vehicle turning angle is greater than the first angle, the piston rods 56 of both left buffer 5 and right buffer 6 are in an extended state, and when the vehicle turns right at the angle greater than the first angle, the piston rods 56 of both left buffer 5 and right buffer 6 are in an extended state.

When a vehicle goes between straight ahead and turns right at the first angle, the piston rod 56 of left buffer 5 of articulated system extends outward to provide a basic damping buffering moment and the piston rod 56 of right buffer 6 retracts, and at this point according to the working process of the above-mentioned buffer, the buffering moment provided by right buffer 6 is negligible; when a vehicle turns right between the first angle and the second angle (i.e. 48° in this embodiment), the piston rod 56 of left buffer 5 extends outward to provide a basic damping buffering moment for the articulated system, and the piston rod 56 of right buffer 6 extends outward and obtains the damping moment arm with the vehicle's turning right so as to provide a basic damping buffering force for the articulated system.

When the vehicle continues to turn right between the second angle and the third angle (i.e. 51° in this embodiment), the proximity switch of said electric control unit 4 is triggered to send out a control signal to the vehicle's electronic control system via the CAN communication system, and the electric control unit 4 controls the solenoid valves 96 of both left buffer 5 and right buffer 6 to make said solenoid valve 96 de-energized as well as said solenoid valves 96 of both left buffer 5 and right buffer 6 closed; at this point, both left buffer 5 and right buffer 6 provides a buffering force moment with enhanced damping for the articulated system.

When the vehicle turns right between the third angle and the fourth angle (i.e. 54° in this embodiment), the proximity switch of said electric control unit 4 is triggered to send out a control signal to the vehicle's electronic control system via the CAN communication system, and the electric control unit 4 controls the solenoid valves 96 of both left buffer 5 and right buffer 6 to make said solenoid valve 96 de-energized; meanwhile, the piston rod 56 of left buffer 5 extends outward to press the handle of said mechanical valve 95 and block the oil circuit in which said mechanical valve 95 is located, providing a buffering moment with safe lock damping, and right buffer 6 provides the articulated system with an enhanced damping moment.

When the vehicle begins to go straight ahead or turn left during the process from its right turning to the fourth angle, front and rear frames 1 and 2 of the articulated system need to slew; since the piston rod 56 retracts, the damping force produced by left buffer 5 with a double-cylinder and single-damping effect is negligible and the damping moment of articulated system is provided by right buffer 6 rather than left buffer 5 ; at this point, the moment arm of left buffer 5 is greater than that of right buffer 6 and the damping of right buffer 6 is a basic damping. According to the computational formula "moment of torque = force * moment arm", it is concluded that since the articulated system slews, the damping moment provided by hydraulic buffering system for articulated system decreases in order to make the articulated system easily slew; moreover, the bigger the turning angle is, the larger the damping moment that preventing the turning angle from increasing is and the smaller the damping moment provided in the case of slewing is, and on this basis, the vehicle quickly slews to its normal driving state, avoiding vehicle rollover because of too large damping moment arising from the slewing process and enhancing the driving safety.

When the vehicle's electronic control system breaks down, the solenoid valves 96 of both left buffer 5 and right buffer 6 are de-energized; in this case, left buffer 5 and right buffer 6 provide the articulated system with enhanced damping and safe lock damping functions to ensure that the vehicle safely travels to the repair factory, and offer high damping force for the vehicle in the case of abnormal power failure to make the vehicle kept in its original state and ensure safety.

Similarly, in the case of articulated system slewing, when the vehicle turns left, the hydraulic buffering system with a double-cylinder and single-damping provides the articulated system with basically the same damping moment at the same angle, and only the functions of left buffer 5 and right buffer 6 exchange with each other. So, for the articulated system, the curve for buffering moments which are mirror images of each other is obtained when the vehicle turns left or right.

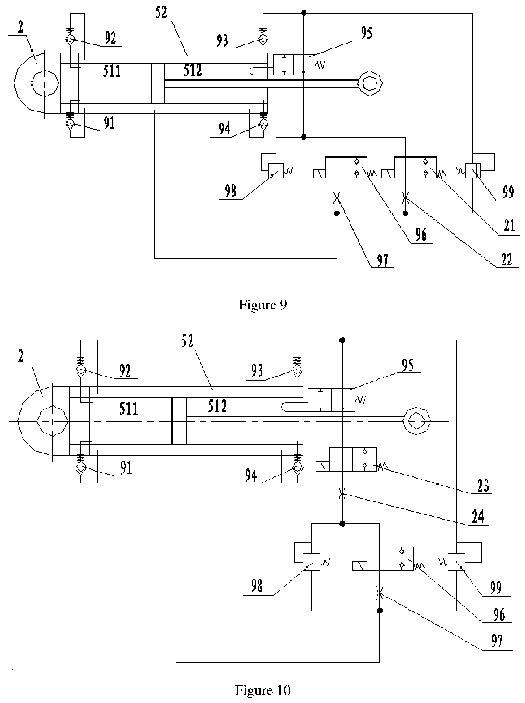

In other embodiments of this invention, the damping control oil circuit on the second oil return circuit between hydraulic cylinder 51 and oil storage tank 52 can be changed as per the vehicle control precision requirement. For example, as shown in Figure 9, at least one damping control oil circuit including a solenoid valve 21 and a hydraulic damping hole 22 is connected in parallel, or as shown in Figure 10, the damping control oil circuit including a solenoid valve 23 and a hydraulic damping hole 24 that is connected in series, so that the hydraulic damping buffering force provided on the damping control oil circuit is made to control the vehicle turning process more stably.

Technical contents and technical characteristics of the present invention have been disclosed as above. However, those skilled in the art could make replacements and modifications based on the disclosure of the invention without prejudice to the spirit of the invention. Accordingly, the scope of protection of this invention shall not be limited to the contents disclosed by the embodiments, but include the replacements and modifications without prejudice to the spirit of the invention and be covered by the claims of the invention.

## Claims

1. An chassis articulation system of articulated vehicle, comprises a front frame, a rear frame, a turntable bearing which connects said front frame and said rear frame, and a hydraulic damping device, wherein said hydraulic damping device comprises a hydraulic cylinder, an oil storage tank, and a hydraulic control oil circuit formed between the hydraulic cylinder and the oil storage tank, and said hydraulic cylinder is provided with a piston and a piston rod and the piston divides the hydraulic cylinder into a rod cavity and a rodless cavity; **characterized in that**: the hydraulic control oil circuit on each buffer is set as: when the rod cavity of hydraulic cylinder is compressed, the hydraulic oil in said rod cavity is returned to the oil storage tank via a oil circuit with a set damping, and the hydraulic oil in the oil storage tank is sucked to the rodless cavity via an oil circuit without a damping; when the rodless cavity of the hydraulic cylinder is compressed, the oil circuits by which the hydraulic oil is returned from the rodless cavity to the oil storage tank and the oil circuits by which the hydraulic oil is sucked from the oil storage tank to the rod cavity are all oil circuits without a damping; and in the articulated bus turning process, the axial line of said hydraulic damping device will pass through the rotation center of said turntable bearing when the vehicle turning reaches a certain angle.

2. The chassis articulation system of Claim 1, wherein said hydraulic damping device includes a left buffer and a right buffer which are installed on both sides of said turntable bearing; when an articulated bus turns, the piston rod of the hydraulic cylinder of one of the left and right buffers is stretched to provide the buffer with a buffering force of said set damping; the piston rod of the hydraulic cylinder of the other buffer is compressed to provide the buffer with a very small buffering force.

3. The chassis articulation system of Claim 2, wherein when an articulated bus turns left or right at a certain angle, the axial line of the buffer on the corresponding side passes through the rotation center of said turntable bearing, and the piston rod of such buffer is retracted to the shortest position; when the articulated bus continues to turn exceed the above-mentioned angle, the piston rod of such buffer will change from a retracted state to an extended state.

4. The chassis articulation system of Claim 1 or 2, wherein the damping of said oil circuit with a set damping includes a basic damping selected as per the compression degree of said rod cavity, an enhanced damping and a safe lock damping.

5. The chassis articulation system of Claim 1, wherein when the articulated bus turns left or right at the same angle, the damping moments produced by said hydraulic damping device are mirror images of each other.

6. The chassis articulation system of Claim 1, wherein said hydraulic control oil circuit includes a first oil absorption circuit and a first oil return circuit which are installed between a rodless cavity of hydraulic cylinder and an oil storage tank, and a second oil absorption circuit and a second oil return circuit which are installed between a rod cavity of hydraulic cylinder and an oil storage tank; there is basically no damping produced between the hydraulic cylinder and the oil storage tank when the hydraulic oil passes through said first oil absorption circuit, said first oil return circuit and said second oil absorption circuit, and different dampings are produced according to the pressure of said second oil return circuit when the hydraulic oil passes through said second oil return circuit.

7. The chassis articulation system of Claim 6, wherein said first oil absorption circuit is provided with a first one-way valve, said first oil return circuit is provided with a second one-way valve, and said second oil absorption circuit is provided with a fourth one-way valve.

8. The chassis articulation system of Claim 6, wherein said second oil return circuit is provided with a third one-way valve, a mechanical valve, a solenoid valve, a hydraulic damping hole and a first overflow valve; said solenoid valve is connected with said hydraulic damping hole and then connect with said first overflow valve in parallel; said parallel-connected solenoid valve is connected with said first overflow , said mechanical valve and said third one-way valve, and said solenoid valve is connected with said hydraulic damping hole to form a basic damping oil circuit, which is used to produce a basic damping; said parallel-connected first overflow valve forms an enhanced damping oil circuit, which is used to produce a enhanced damping that larger than said basic damping.

9. The chassis articulation system of Claim 8, wherein said second oil return circuit is also connected in parallel with a safe lock oil circuit; said safe lock oil circuit is provided with a second overflow valve that connected with said third one-way valve, which is used to provide a safe lock damping that larger than said enhanced damping.

10. The articulated chassis articulation system as set forth in Claim 1, wherein said oil storage tank is installed outside the hydraulic cylinder, and both ends of said oil storage tank and said hydraulic cylinder are fixly connected with a manifold block and a end cover respectively; said hydraulic cylinder and said oil storage tank are connected with said rear frame through said end cover, and said piston and said piston rod are connected with said front frame.

11. The chassis articulation system of Claim 1, wherein said hydraulic damping device is provided with a mechanical valve, which has a mechanical valve core extending in the rod cavity of hydraulic cylinder, and under the push of the piston, said mechanical valve core blocks the oil circuit in which the mechanical valve is located.

12. The chassis articulation system of Claim 8, wherein said chassis articulation system of articulated vehicle also includes an electric control unit, which controls the opening or closing of said solenoid valve according to the pressure of hydraulic oil circuit.
